# NEW EUROPEAN PATENT SPECIFICATION

(11) **EP 0 626 397 B2**
(45) Date of publication and mention of the opposition decision: **17.01.2001**
(45) Mention of the grant of the patent: 08.01.1997
(21) Application number: 94107242.3
(22) Date of filing: 09.05.1994
(51) Int. Cl.: C08F 220/12, C08F 220/28, C09J 133/06

(54) **Acetoacetoxy alkyl (meth)acrylate in thermoplastic acrylic and styrene/acrylic latexes for ceramic tile adhesives**
Aceto Acetoxy Alkyl (Meth)Acrylate in thermoplastischem Acryl und Styrol/Acryl Latexen für Klebemittel für keramische Fliesen
Acéto acétoxy alkoyl(meth) acrylates dans des latex thermoplastiques acryliques et styrène/acryliques pour des compositions adhésives pour carrelage céramique

(30) Priority: 10.05.1993 US 59925; 08.04.1994 US 224929
(43) Date of publication of application: 30.11.1994
(73) Proprietor: National Starch and Chemical Investment Holding Corporation, Wilmington, Delaware 19809 (US)
(72) Inventor: Farwaha, Rajeev, Brampton, Ontario L6T 1M1 (CA); Currie, William, Elmira, Quebec N3B 2G3 (CA); Zerey, Michel, Montreal, Quebec 83B 2N6 (CA)
(74) Representative: Hagemann, Heinrich, Dr.rer.nat., Dipl.-Chem.

(56) References cited:
- EP-A- 0 137 199
- DE-A- 1 644 990
- DE-A- 3 149 797

## Description

This invention relates to thermoplastic, all-acrylic homopolymer and styrene/acrylic copolymer latexes that contain water resistance promoters for use in ceramic tile adhesives.

Ceramic tiles are used in many circumstances where water resistance is needed, for example, in bathrooms, kitchens, and for exterior uses. All-acrylic homopolymers and styrene/acrylic copolymers are known to be useful bases for adhesives for the tiles, but these polymers do not exhibit adequate adhesion and cohesion under conditions of high humidity.

This invention is a ceramic tile adhesive composition having improved water resistant properties comprising a thermoplastic polymer which has a glass transition temperature of 10°C to 40°C, said polymer is the emulsion polymerization reaction product of a) at least one monomer selected from the group consisting of C₁-C₁₂ alkyl esters of acrylic acid, and C₁-C₁₂ alkyl esters of methacrylic acid; b) 2 to 10 weight percent, based on the total weight of monomers, of at least one monomer selected from the group consisting of unsaturated C₃-C₆ monocarboxylic acids, unsaturated C₄-C₆ dicarboxylic acids and the C₁-C₄ half esters of unsaturated C₄-C₆ dicarboxylic acids; c) 0.002 to 1 weight percent, based on the total weight of monomers, of at least one multifunctional crosslinking monomer having two or more polymerizable carbon-carbon double bonds per molecule; d) optionally, one or more monomer(s) selected from the group consisting of styrene, C₁-C₄ alkyl substituted styrene, halogenated styrene and unsaturated C₃-C₄ amides; and e) 0.5 to 5 weight percent, based on the total weight of monomers, of at least one 2-acetoacetoxy-(C₁-C₄)alkyl-acrylate or - methacrylate.

The thermoplastic polymer particles of the latexes of this invention are broadly characterized as styrene/acrylic copolymers and all-acrylic homopolymers that incorporate an acetoacetonate moiety derived from 2-acetoacetoxy (C₁-C₄) alkyl acrylate or methacrylate. The acetoacetonate imparts water resistance to the polymer and will be polymerized into the polymer in amounts from 0.5-5.0 parts per hundred parts by weight of monomer(s). Preferred acetoacetonate monomers include acetoacetoxy propyl methacrylate, acetoacetoxy propyl acrylate, and acetoacetoxy ethyl acrylate and acetoacetoxy ethyl methacrylate. These monomers can be prepared using known synthetic techniques; for example, the following synthetic route may be used: 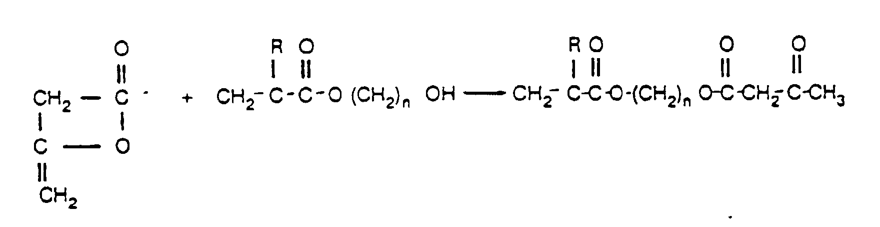 where R is hydrogen or methyl and n is the integer 2 or 3.

Alternatively, acetoacetoxy alkyl acrylates or methacrylates can be purchased commercially; for example, acetoacetoxy ethyl methacrylate can be purchased from Eastman Chemical Company under the tradename AAEM, or from Lonza Ltd. under the tradename AAEMA.

The polymers are prepared either as acrylic homopolymers or as acrylic/styrene copolymers. The particular choice and weight ratio of monomers will depend on the desired Tg range for the polymer, which can be calculated using the Fox equation: 1/Tg (polymer) = W₍ₐ₎/Tg₍ₐ₎+W_{(b)}/Tg_{(b)}+..., where W(a) and W(b) are the weight fractions of comonomers (a) and (b) and Tg₍ₐ₎ and Tg_{(b)} are the glass transition temperatures for homopolymers (a) and (b), respectively. Glass transition temperatures for various homopolymers are available in many literature sources, including J. Brandup and E.H. Immergut, *Polymer Handbook,* 2nd ed., John Wiley & Sons, New York, pp 139-192 (1975).

The latex particles preferably will have a glass transition temperature (Tg) in the range of 10°-40°C. In general, when the Tg value of the latex polymer is lower than 10°C, the cohesive and adhesive strengths and water resistance of the adhesive lessen, and when the Tg is higher than 40°C, the flexibility of the adhesive is reduced.

Suitable monomers include the C₁-C₁₂ alkyl esters of acrylic and methacrylic acid, preferably C₁-C₄ alkyl esters of acrylic and methacrylic acid, styrene, C₁-C₄ alkyl substituted styrene and halogenated styrene, such as, alphamethylstyrene, 2-chlorostyrene, 4-chlorostyrene, 2,5-dichlorostyrene and 4-methoxystyrene. The preferred monomers are methyl acrylate, ethyl acrylate, butyl acrylate, 2-ethylhexyl acrylate, decyl acrylate, methyl methacrylate, ethyl methacrylate, styrene and the described substituted styrenes.

In order to optimize the adhesive and cohesive properties of the ultimate ceramic tile adhesive composition, the polymer also comprises unsaturated carboxylic acid monomers and may also comprise unsaturated amide monomers. These functional monomers enhance the binding capacity of polymer particles in a highly filled (pigment loaded) ceramic tile adhesive composition, and also enhance the mechanical stability and colloidal stability of the latex particles. Examples of suitable carboxylic acid monomers are the C₃-C₆ monocarboxylic acids, such as, methacrylic acid, acrylic acid, mono-methylmaleate, and mono-ethylmaleate and C₄-C₆ dicarboxylic acids, such as fumaric acid, maleic acid, and itaconic acid, and their C₁-C₄ half esters. The carboxylic acid monomers are employed in amounts between 2-10 parts per hundred parts by weight of monomer, preferably between 3-7 parts per hundred parts by weight of monomer. Examples of suitable amides are acrylamide and methacrylamide. When amide monomers are employed, they are present in amounts from 0.5-3 parts per hundred parts by weight of monomer, preferably 0.5-1 parts per hundred monomer.

To aid in cohesion, the polymers also comprises a low level of a multifunctional crosslinking monomer having two or more polymerizable carbon-carbon double bonds per molecule, such as vinyl or allyl acrylate or methacrylate, diol multifunctional acrylates and methacrylates, methylene-bis-acrylamide, diallyl maleate, diallyl phthalate, triallyl cyanurate and triallyl isocyanurate. The multifunctional monomer is in an amount from 0.002 to 1 part per hundred parts by weight of monomer.

The polymerisation of the polymer can be accomplished by known procedures for polymerization in aqueous emulsion. Optionally, conventional seeding procedures can be employed to aid in controlling polymerization to achieve the desired average particle size and particle size distribution. If seeding is employed, the polymer seed will be present in amounts that correspond to about 0.1% to 8% by weight of the total polymer, and will range in size from about 20% to 60% of the diameter of the polymer particles to be formed. The seed latex can constitute a previously prepared latex or polymer powder, or it can be prepared in situ. The monomeric composition of the seed latex can vary; however, it is preferable that it be substantially the same as that of the polymer.

The monomer or comonomers and, optionally, the seed to be employed in the preparation of the polymer are dispersed into water with agitation sufficient to emulsify the mixture. The aqueous medium may also contain a free radical polymerization catalyst, an emulsifying agent (i.e., surfactant), or other ingredients that are known and conventionally employed in the art as emulsion polymerization aids.

Suitable free radical polymerization catalysts are the catalysts known to promote emulsion polymerization and include water-soluble oxidizing agents, such as. organic peroxides (e.g., t-butyl hydroperoxide, cumene hydroperoxide, etc.), inorganic oxidizing agents (e.g., hydrogen peroxide, potassium persulfate, sodium persulfate, ammonium persulfate, etc.) and those catalysts that are activated in the water phase by a water-soluble reducing agent. Such catalysts are employed in a catalytic amount sufficient to cause polymerization. As a general rule, a catalytic amount ranges from about 0 01 to 5 parts per hundred parts by weight of monomer. As alternatives to heat or catalytic compounds to activate the polymerization, other free radical producing means, such as exposure to activating radiations, can be employed.

Suitable emulsifying agents include anionic, cationic, and nonionic emulsifiers customarily used in emulsion polymerization. Usually, at least one anionic emulsifier is utilized and one or more nonionic emulsifiers may also be utilized. Representative anionic emulsifiers are the alkyl aryl sulfonates, alkali metal alkyl sulfates, the sulfonated alkyl esters, and fatty acid soaps. Specific examples include sodium dodecylbenzene sulfonate, sodium butylnaphthalene sulfonate, sodium lauryl sulfate, disodium dodecyl diphenyl ether disulfonate, N-octadecyl disodium sulfosuccinate and dioctyl sodium sulfosuccinate. The emulsifying agents are employed in amounts to achieve adequate emulsification and to provide desired particle size and particle size distribution.

Other ingredients known in the art to be useful for various specific purposes in emulsion polymerization, such as, acids, salts, chain transfer agents, and chelating agents, can also be employed in the preparation of the polymer. For example, if the pciymerizable constituents include a monoethylenically unsaturated carboxylic acid comonomer, polymerization under acidic conditions (pH 2-7, preferably 2-4) is preferred. In such instances, the aqueous medium can include those known weak acids and their salts that are commonly used to provide a buffered system at the desired pH range.

The manner of combining the polymerization ingredients can be by various known monomer feed methods, such as, continuous monomer addition, incremental monomer addition, or addition in a single charge of the entire amount of monomers. The entire amount of the aqueous medium with polymerization additives can be present in the polymerization vessel before introduction of the monomers, or alternatively, the aqueous medium, or a portion of it, can be added continuously or incrementally during the course of the polymerization.

Polymerization is initiated by heating the emulsified mixture with continued agitation to a temperature usually between about 50°-110°C, preferably between 60°-100°C. Polymerization is continued by maintaining the emulsified mixture at the selected temperature until conversion of the monomer or monomers to polymer has been reached.

Following polymerization, the solids content of the resulting aqueous heterogeneous polymer latex can be adjusted to the level desired by the addition of water or by the removal of water by distillation. Generally, the desired level of polymeric solids content is from about 20-60% by weight on a total weight basis.

The size of the polymer particles can vary; however, for optimum water resistant ceramic tile adhesive characteristics, it is preferable that the particles have an average diameter of less than 250 nanometers. In general, for the polymer of this invention, the smaller the average particle size, the more water resistant the polymer. Suitable particle sizes can generally be achieved directly from the polymerization. However, screening of the resulting latex to remove particles outside the desired size range and to thus narrow the particle size distribution may be employed.

For various applications, it is sometimes desirable to have small amounts of additives, such as, surfactants, bacteriocides (e.g., formaldehyde), pH modifiers, and antifoamers, incorporated in the latex, and this may be done in a conventional manner and at any convenient point in the preparation of the latexes.

### Examples

Example 1: A series of styrene-acrylic and all-acrylic latexes containing 2-acetoacetoxyethyl methacrylate (a product of Lonza Ltd.) as a water resistance promoting monomer, using an anionic surfactant, Fenopon EP-110 (a product of Rhone Poulene), and a non-ionic surfactant, Triton X-165 (a product of Union Carbide) was prepared according to the following general procedure.

| Initial Charge | | |
|---|---|---|
| Compound | Grams | Concentration in pphm* |
| Water | 277.0 | 37.73 |
| Fenopon EP-110 | 3.0 | 0.40 |
| Drew L-475 | 0.3 | 0.04 |

| Monomer Mix | | |
|---|---|---|
| Water | 369.0 | 50.27 |
| Fenopon EP-110 | 63.0 | 8.58 |
| Triton X-165 | 1.1 | 0.15 |
| Styrene | 328.0 | 44.68 |
| Butyl acrylate | 406.0 | 55.31 |
| Methacrylic acid | 38.0 | 5.17 |
| Diallyl phthalate | 3.0 | 0.4 |
| 2-Acetoacetoxy ethyl methacrylate | 15.0 | 2.04 |

| Catalyst Solution | | |
|---|---|---|
| Water | 51.0 | 6.94 |
| Ammonium Persulfate | 4.0 | 0.54 |

| | | |
|---|---|---|
| *parts per hundred parts by weight of monomer(s) | | |

In a 3 liter reaction vessel, equipped with a reflux condenser, addition funnels, and stirrer, an initial charge of water, anionic and non-ionic surfactant and defoamer, was mildly agitated and heated to 78°C. A 52.0 gm portion of the monomer mix and 8.0 gm of the catalyst solution were then charged to the reaction vessel and the reaction mix held for 20 minutes at the same temperature. The remainder of the first-stage monomer mix was metered into the reaction over the course of 4 hours.

The catalyst solution was delivered to the reactor over a period of 4.5 hours and the reaction allowed to proceed to completion. The reaction was then held for 10 minutes at 78°C, and allowed to cool to room temperature. As the reaction mixture was cooling, 0.5 gm of tertiary butyl hydroperoxide and 0.2 gm sodium formaldehyde sulfoxylate were added when the temperature reached 65°C. The pH of the resultant latex was adjusted to between 7-8 by the addition of 26.6% aqueous ammonium hydroxide solution.

The resulting latex was designated 1A and had the following physical properties: 51.4% solids: particle size (PS) 131nm: viscosity 750 mPa.s; pH 8.0; Tg 18.5°C (DSC).

A second styrene-acrylic latex employing 2-acetoacetoxy ethyl methacrylate at 3.0 part per hundred parts by weight of monomer was synthesized. The latex was designated 1B, and exhibited the following physical properties: 50% solids; PS 127nm; viscosity 880 mPa.s; pH 8.0; Tg 20.0°C (DSC).

As a control, a styrene-acrylic latex without the water resistant comonomer, designated 1C was synthesized following the polymerization procedure in Example 1.

The latex properties and monomeric compositions of the latexes are set out in Table I.

**Table I**

| **Composition and Properties of Styrene-Acrylic Latexes** | | | |
|---|---|---|---|
| Latex Composition^{a} | 1A | 1B | 1C |
| Styrene | 44.7 | 45.2 | 45.4 |
| Butyl acrylate | 55.3 | 54.8 | 54.6 |
| Methacrylic acid | 5.0 | 5.0 | 5.0 |
| 2-Acetoacetoxy ethyl methacrylate | 2.0 | 3.0 | 0 |

| Product Physicals | | | |
|---|---|---|---|
| % Solids | 51.4 | 50.0 | 50.0 |
| PS (nm) | 131 | 127 | 133 |
| Viscosity (mPa.s) | 750 | 880 | 230 |
| pH | 8.0 | 8.0 | 8.0 |
| Tg°C (DSC) | 18.5 | 20 | 19 |

| | | | |
|---|---|---|---|
| ^{a} In parts per hundred parts by weight of monomer(s) | | | |

Example 2: An all-acrylic latex with 2-acetoacetoxy ethyl methacrylate at 2 parts per hundred parts by weight of monomer was synthesized following the polymerization procedure in Example 1 and was designated latex 2A. As a control, an all-acrylic latex containing no 2-acetoacetoxy ethyl methacrylate comonomer was synthesized following the procedure of Example 1 and was designated latex 2B. The latex properties and monomeric compositions are set out in Table II.

**Table II**

| **Composition and Properties of All-Acrylic Latexes** | | |
|---|---|---|
| Latex Composition^{a} | 2A | 2B |
| Methyl methacrylate | 48 | 48 |
| Butyl acrylate | 52 | 52 |
| Methacrylic acid | 5.0 | 5.0 |
| 2-Acetoacetoxy ethyl methacrylate | 2.0 | 0 |

| Product Physicals | | |
|---|---|---|
| % Solids | 175 | 200 |
| PS (nm) | 151 | 150 |
| pH | 7.8 | 7.5 |
| Tg°C | 19.0 | 19.0 |
| Viscosity (mPa.s) | 175 | 200 |

| | | |
|---|---|---|
| ^{a} in parts per hundred parts by weight of monomer(s) | | |

Example 3: The latexes of Examples 1 and 2 were formulated into a ceramic tile adhesive formula as set out in Table III.

**Table Ill**

| **Ceramic Tile Adhesive Formula** | |
|---|---|
| Compound | Grams |
| Water | 158.64 |
| Igepal CO 630 | 1.05 |
| Alco L11 | 10.57 |
| Nopco NDW | 1.05 |
| Natrasol 250 HR | 10.57 |
| Latex (50% solids) | 317.30 |
| Kathon LX | 0.52 |
| NaOH (10%) | 10.57 |
| Omyacarb #10 | 243.25 |
| Gammasperse | 243.25 |
| 65.68% Solids | 1000.00 |
| 1. Igepal CO 630 is an ethoxylated nonyl phenol surfactant containing 9-10 moles of ethylene oxide, a product of Rhone-Poulenc. 2. Alco L 11 is a water based rheology modifier, a product of Alco Chemical Ltd. 3. Nopco NDW is a dispersant, a product of Henkel Chemicals. 4. Natrosol 250 HR is hydroxy ethyl allulose, a product of Aqualon Company 5. Kathon LX is a microbiocide having an active ingredients 5-chloro-2-methyl-4-isothiazolin-3-one and 2-methyl-4-isothiazolin-3-one present in an amount up to 14%, a product of Rhom & Haas. 6. Omyacarb #10 is a calcium carbonate, a product of Omya 7. Gammasperse is a calcium carbonate pigment, a product of Georgia Marble Corp. | |

Example 4: The ceramic tile adhesive compositions were tested according to the following test procedure as outlined in American National Standard for organic adhesives for installation of ceramic tiles, Type I adhesive, ANSI 136.1, hereby incorporated by reference in its entirety.

Glazed wall ceramic tiles (108 x 108 mm) having a normal thickness of 8 mm and water absorption of 13-15% according to ASTM C373, hereby incorporated by reference in its entirety, were used. A template was placed over the unglazed back of a test tile. Sufficient adhesive was troweled across the template and screened clean. Spacer rods were inserted, and exactly 2 minutes after the adhesive had been applied, an uncoated tile was brought into contact with the coated tile with the back pattern ribs parallel and offset in such a way that each tile overlapped on the end of the other tile by exactly 6 mm. The bonded tile assembly was subjected to a total load of 6.8 kg, for a 3 minute period. The assembly was conditioned in an atmosphere of 50 ± 5% relative humidity (RH) and room temperature for a period of 72 hours. The bonded assemblies were aged in a horizontal position for a period of 21 days in an air circulating oven, immersed in water at 23°C for a period of 7 days, and tested for shear strength using tensile tester Conten Model 10.

**Table IV**

| **Shear Strength Test Results - ANSI 136.1 Type I Adhesive** | | | | | |
|---|---|---|---|---|---|
| | 1A^{a} | 1B^{a} | 1C^{b} | 2A^{a} | 2B^{b} |
| Shear strength (wet) in psi | 41 | 43 | 13 | 41 | 14 |
| Shear strength (wet) in mPa | 0.2867 | 0.30 | 0.090 | 0.286 | 0.0979 |
| Shear strength (wet) in kgs/cm² | 2.88 | 3.02 | 0.914 | 2.88 | 0.987 |

| | | | | | |
|---|---|---|---|---|---|
| ^{a} 2-acetoacetoxy ethyl methacrytate on polymer backbone | | | | | |
| ^{b} Control-no 2-acetoacetoxy ethyl methacrylate on latex particles | | | | | |

The results set out in Table IV show that the shear strength of ceramic tile adhesives made employing latexes containing 2-acetoacetoxyethyl methacrylate are superior to adhesives made with latexes containing no 2-acetoacetoxyethyl methacrylate.

## Claims

1. A ceramic tile adhesive composition having improved water resistant properties comprising a thermoplastic polymer which has a glass transition temperature of 10°C to 40°C, said polymer is the emulsion polymerization reaction product of
a) at least one monomer selected from the group consisting of C₁-C₁₂ alkyl esters of acrylic acid, and C₁-C₁₂ alkyl esters of methacrylic acid;
b) 2 to 10 weight percent, based on the total weight of monomers, of at least one monomer selected from the group consisting of unsaturated C₃-C₆ monocarboxylic acids, unsaturated C₄-C₆ dicarboxylic acids and the C₁-C₄ half esters of unsaturated C₄-C₆ dicarboxylic acids;
c) 0.002 to 1 weight percent, based on the total weight of monomers, of at least one multifunctional crosslinking monomer having two or more polymerizable carbon-carbon double bonds per molecule;
d) optionally, one or more monomer(s) selected from the group consisting of styrene. C₁-C₄ alkyl substituted styrene, halogenated styrene and unsaturated C₃-C₄ amides; and
e) 0.5 to 5 weight percent, based on the total weight of monomers, of at least one 2-acetoacetoxy-(C₁-C₄)alkyl-acrylate or -methacrylate.

## Patentansprüche

1. Klebemittel für keramische Fliesen mit verbesserter Wasserbeständigkeit umfassend ein thermoplastisches Polymer mit einer Glasübergangstemperatur von 10°C bis 40°C, wobei das Polymer das Reaktionsprodukt der Emulsionspolymerisation ist von
a) mindestens einem aus der Gruppe aus C₁-C₁₂-Alkylestern der Acrylsäure und C₁-C₁₂-Alkylestern der Methacrylsäure ausgewählten Monomer,
b) 2 bis 10 Gew.%, bezogen auf das Gesamtgewicht des Monomers, von mindestens einem aus der Gruppe aus C₃-C₆-Monocarbonsäuren, ungesättigten C₄-C₆-Dicarbonsäuren und C₁-C₄-Halbestern von ungesättigten C₄-C₆-Dicarbonsäuren ausgewählten Monomer,
c) 0,002 bis 1 Gew.%, bezogen auf das Gesamtgewicht der Monomere, von mindestens einem multifunktionalen Vernetzungsmonomer mit zwei oder mehr polymerisierbaren Kohlenstoff-Kohlenstoff Doppelbindungen pro Molekül,
d) fakultativ ein oder mehrere aus der aus Styrol, C₁-C₄-Alkyl-substituiertem Styrol, halogoniertem Styrol und ungesättigten C₃-C₄-Amiden bestehenden Gruppe ausgewählten Monomere und
e) 0,5 bis 5 Gew.%, bezogen auf das Gesamtgewicht der Monomere, von mindestens einem 2-Acetoacetoxy-(C₁-C₄)-alkylacrylat oder -methacrylat.

## Revendications

1. Composition adhésive pour carreaux céramiques possédant de très bonnes propriétés de résistance à l'eau, comprenant un polymère thermoplastique qui a une température de transition vitreuse de 10°C à 40°C et qui est le produit de la réaction de polymérisation en émulsion de
(a) au moins un monomère choisi dans le groupe consistant en esters d'alkyle en C₁ à C₁₂, d'acide acrylique et esters d'alkyle en C₁ à C₁₂ d'acide méthacrylique ;
(b) 2 à 10 % en poids, sur la base du poids total de monomères, d'au moins un monomère choisi dans le groupe consistant en acides monocarboxyliques en C₃ à C₆ insaturés, acides dicarboxyliques en C₄ à C₆ insaturés et les hémi-esters en C₁ à C₄ d'acides dicarboxyliques en C₄ à C₆ insaturés ;
(c) 0,002 à 1 % en poids, sur la base du poids total de monomères, d'au moins un monomère multi-fonctionnel de réticulation ayant 2 ou plus 2 doubles liaisons carbone-à-carbone polymérisables par molécule ;
(d) à titre facultatif, un ou plusieurs monomères choisis dans le groupe consistant en styrène, styrène à substituant alkyle en C₁ à C₄, styrène halogéné et amides en C₃ ou C₄ insaturés ; et
(e) 0,5 à 5 % en poids, sur la base du poids total de monomères, d'au moins un acrylate ou méthacrylate de 2-acétylacétoxy-(alkyle en C₁ à C₄).
